# EUROPEAN PATENT SPECIFICATION

(11) **EP 2 986 431 B1**
(45) Date of publication and mention of the grant of the patent: **28.10.2020**
(21) Application number: 14737498.7
(22) Date of filing: 08.01.2014
(51) Int. Cl.: B29C 45/14

(54) **MOLDING PROCESS FOR AN INSULATION COMPONENT**
FORMVERFAHREN FÜR EIN ISOLIERTEIL
PROCESSUS DE MOULAGE POUR UN COMPOSANT D'ISOLATION

(30) Priority: 08.01.2013 CN 201310006391; 15.03.2013 CN 201310084160
(43) Date of publication of application: 24.02.2016
(73) Proprietor: BASF SE, 67056 Ludwigshafen am Rhein (DE); Haier Group Corporation, Qingdao, Shandong 266101 (CN); Haier Group Technique R&D Center, Qingdao, Shandong 266101 (CN)
(72) Inventor: WANG, Jianjun, Shanghai 200137 (CN); YIN, Fengfu, Qingdao Shandong 266101 (CN); HAN, Wei, Shanghai 200137 (CN); LI, Hongtao, Qingdao Shandong 266101 (CN); ZHOU, Yangchun, Shanghai 200137 (CN); LIU, Peng, Qingdao Shandong 266101 (CN); ZHAO, Shilei, Qingdao Shandong 266101 (CN); SHAO, Yanan, Qingdao Shandong 266101 (CN)
(74) Representative: Féaux de Lacroix, Stefan
(86) International application number: PCT/CN2014/070304
(87) International publication number: WO 2014/108067

(56) References cited:
- CN-A- 1 869 093
- DE-A1- 3 644 434
- US-A- 3 954 926
- US-A- 4 927 044
- US-A- 5 300 264
- US-A1- 2004 239 000

## Description

### FIELD OF THE INVENTION

The present invention relates to a molding process for a thermal insulation component for a thermal insulation device such as a refrigerating device or a refrigerator.

### BACKGROUND OF THE INVENTION

Traditional insulation component generally includes an inner insulation foam layer, a shell and a liner, with the shell and liner being pre-assembled together via a pre-assembling part. This kind of insulation component has the disadvantages of requiring pre-assembling parts, having many seams on the outer surface, having poor sealing effect, requiring pre-assembling step and many other process steps during the manufacturing process, with high production cost.

A traditional method for preparing insulation component generally comprises the following steps:
1. to prepare a shell, wherein the shell is generally a metal shell (usually a steel plate obtained by bending, stamping, and the stainless steel should be treated by brushing, polishing, coating or powder spray coating) or a glass shell (glass surface should be treated with patterned printing or the rear part of the glass should be printed with electrostatic transfer pattern);
2. to prepare a liner, wherein the liner is generally a polystyrene (PS) material, being molded by vacuum-forming and cutting to obtain the liner;
3. to fix the shell to the liner by pre-assembling parts, such as using upper and lower door locks, flute and other fasteners; and
4. to form a foam, wherein foaming material is injected into the cavity between the liner and the shell, and is foamed at a suitable temperature and pressure to obtain the insulation foam layer.

Therefore, the traditional method for preparing insulation component requires many pre-assembling parts, comprises complicated process steps, needs more production stations and high production costs. The resulting insulation component is relatively heavy, and is difficult to transport and assemble. The step of vacuum-forming has specific requirements on the structure of the mold and the material of the mold, will lead to high process cost. Furthermore, lowering the pressure inside the mold to vacuum will make the process be complicated.

Furthermore, in preparing an insulation component of a refrigerating device in the prior art, especially a refrigerator door, the upper and lower door locks, flute and other fasteners have to be used to fix the liner and the shell, which makes the preparation process cumbersome with high preparation cost. The refrigerator door thus obtained is relatively heavy, such that transportation and assembling are not easy, and the obtained refrigerator is relatively heavy, is inconvenient to be placed or moved. Document US 3 954 926 A discloses a molding process for a thermal insulation component of a refrigerating device provided with a thermal insulation component which comprises an inner insulation foam layer and a seamless stiff polymer material layer formed by reaction injection molding and sandwiching the inner insulation foam layer, wherein
- the insulation component is a door of a cold storage device or a cabinet,
- the seamless stiff polymer material layer is a seamless stiff PU layer,
- the seamless stiff polymer material layer is hard and comprises a high rigidity,
- the seamless stiff polymer material layer (by comprising the same material like the insulation component differing only in the absence of a blowing agent) has density and hardness that is greater than the density and hardness of the inner insulation foam layer respectively; and
- the inner insulation foam layer is an inner insulation PU foam layer, the method comprising the following process steps:
   A. fixing an inner insulation foam layer into a mold;
   B. injecting into the mold a reaction material to form a seamless stiff polymer material layer sandwhiching the inner insulation foam layer by reaction injection-molding The document foruther discloses that step B is a step of injecting PU reaction material into the mold, forming a seamless stiff PU layer sandwhiching the inner insulation foam layer by reaction injection-molding, wherein
- the reaction material is injected through a inlet of the mold until the reaction material fills up the mold, and then reaction curing the reaction material carried out wherein
   the inner insulation foam layer is an inner insulation polyurethane foam layer;
   the mold is a mold for integrated molding of the seamless stiff polymer material layer; and
   the reaction material is a polyurethane-synthesizing material for forming the seamless stiff polymer material layer, and
   the thermal insulation component is an insulation door or cabinet having a shell and a liner, and the shell and the liner are integratedly formed by the seamless stiff polymer material layer.

Chinese Patent No.CN2459597Y discloses a refrigerator door structure (i.e., insulation component) and a process for producing the same, wherein the process uses a plastics suction-molding process to separately form the shell and the liner, employs a extrusion molding process to form the door frame, and then fixes the 3 parts together for foaming to get the refrigerator door (insulation component). The process, to some extent, reduces the number of the pre-assembly steps. However, the door body still needs frame pieces, and a pre-assembly process is still complicated. The presence of door frame pieces also impairs the aesthetic effect of the refrigerator door (insulation component).

### SUMMARY

An objective of this invention is to provide an insulation component with a good sealing effect, which can be produced simply with low production cost.

Another object of this invention is to provide a molding process for the insulation component with less pre-assembly process steps and low production cost.

Since the molding process for the insulation component of the invention is to form a seamless stiff polymer material layer surrounding the inner insulation foam layer via reaction injection-molding, no other connecting component is required to pre-assemble the liner and the shell together, the number of pre-assembly process steps is reduced, the producing process is simple, and the production cost is low.

On the other hand, an objective of this invention is to provide a simple preparation process for an insulation door or cabinet without a assembling step.

Another objective of this invention is to provide an insulation door or cabinet which is light, simply processed and has good insulation effect.

Still another objective of this invention is to provide a refrigerating device and this refrigerating device is light and has good insulation effect.

The molding process of the invention is defined in claim 1. Preferred embodiments are defined in the dependent claims.

### DESCRIPTION OF THE DRAWINGS

Figure 1 shows the cross section of the insulation component of the invention, wherein 1 means seamless stiff polymer material layer; 2 means inner insulation foam layer.
Figure 2 is the process diagram of an embodiment of the molding process for the insulation component of the invention.
Figure 3 is the process diagram of an embodiment of the molding process for the integral insulation door or cabinet of the invention.

### DETAILED DESCRIPTION OF THE INVENTION

Unless defined otherwise, all technical and scientific terms used herein have the same meaning as commonly understood by anyone of ordinary skill in the art to which this invention belongs.

Expressions "a", "an", "the", when used to define a term, include both the plural and singular forms of the term.

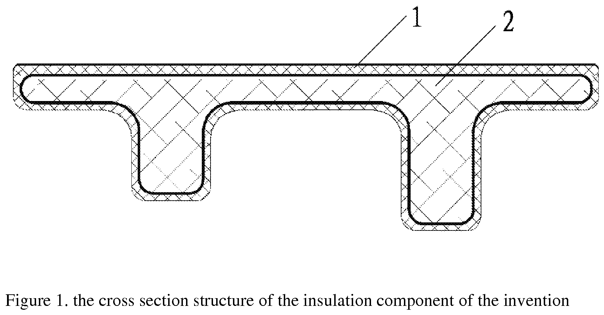

In an embodiment of the invention, as is shown in Figure 1, the present invention provides an insulation component, comprising an inner insulation foam layer 2 and a seamless stiff polymer material layer 1 formed by reaction injection molding and surrounding the inner insulation foam layer 2.

The above-mentioned insulation component of the invention has a seamless stiff polymer material layer 1, formed by reaction injection molding, surrounding the inner insulation foam layer 2, thereby the insulation component of the invention has good sealing effect, does not need pre-assembled component, can be produced in simple way with low production cost.

According to the present invention, there is no pre-assembled part or other part on top of the seamless stiff material layer of the seamless stiff polymer material layer 1. Therefore, the insulation component of the invention has apparently integral structure. Because the stiff material layer is seamless, the sealing effect is good and the overall outlook is neat and tidy.

The mentioned stiff material means that the material has enough strength and hardness that meet the requirements on strength and hardness of an insulation component.

Optionally, in order to provide the seamless stiff polymer material layer 1 with suitable hardness, corrosion resistance, light weight and better insulation effect, the seamless stiff polymer material layer 1 is a seamless stiff PU (Polyurethane, the same below) layer, a seamless stiff PS (polystyrene, the same below) layer, a seamless stiff ABS (Alkyl Benzo sulfonate, acrylonitrile-butadiene-styrene plastics, the same below) layer, or a seamless stiff TPE (Thermoplastic Elastomer, the same below) layer.

Optionally, in order to obtain a better insulation effect, the inner insulation foam layer 2 is an inner insulation PU foam layer or inner insulation PF (Phenol Formaldehyde, the same below) foam layer.

Preferably, the inner insulation foam layer and the seamless stiff polymer material layer of the present invention are made of the same material.

In an embodiment of the invention, the insulation component having the inner insulation foam layer and the seamless stiff polymer material layer of the invention is made of the same material.

Optionally, in order to render the surface of the insulation component with sufficient hardness and strength, the seamless stiff PU layer has density or hardness that is greater than the density or hardness of the inner insulation PU foam layer respectively.

Optionally, the seamless stiff polymer material layer 1 comprises at least a part of the stiff material that is above food safety grade, such that the part of the seamless stiff polymer material layer 1 which contacts food is safe and hygienic.

Optionally, the seamless stiff polymer material layer 1 comprises a shell and a liner being fitted together, with the liner being a stiff material that is above food safety grade. As during the application, the liner may be in contact with food, the use of stiff material layer above food safety grade for the liner has an additional advantage of food safety and hygiene.

Optionally, in order to allow the seamless stiff polymer material layer 1 to have suitable hardness and strength, the thickness of the seamless stiff polymer material layer 1 is of 1 mm ∼ 3mm.

Optionally, the insulation component is a door of a cold storage device, a cabinet or a shelving board. The cold storage device can be refrigerator, freezer or ice bar, etc. When the insulation component is used as a door of a cold storage device, a cabinet or a shelving board, the thermal insulation effect is good, the hardness is suitable and the weight is light.

Preferably, the seamless stiff polymer material layer 1 of the invention has hardness of 75D or more to meet the requirement on the hardness of the insulation component.

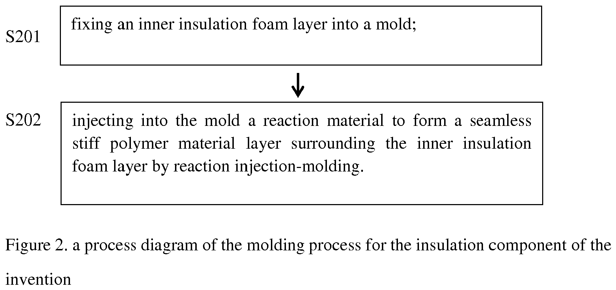

In another embodiment of the invention, as is shown in Figure 2, the present invention relates to a molding process for the insulation component, comprising the following process steps:
S201: fixing an inner insulation foam layer into a mold;
S202: injecting into the mold a reaction material to form a seamless stiff polymer material layer surrounding the inner insulation foam layer by reaction injection-molding.

In the present invention, when the reaction material is injected into the mold, the pressure inside the mold is the ambient pressure, preferably it is the normal pressure.

Since the molding process for the insulation component of the invention is to form a seamless stiff polymer material layer surrounding an inner insulation foam layer via reaction injection-molding, no other connecting component is required to pre-assemble the liner and the shell together, the number of pre-assembly process steps is reduced, the producing process is simple, and the production cost is low.

According to the present invention, there is no pre-assembled part or other part on top of the seamless stiff material layer of the seamless stiff polymer material layer 1. Therefore, the insulation component of the invention has apparently integral structure. Because the stiff material layer is seamless, the sealing effect is good and the overall outlook is neat and tidy.

The mentioned stiff material means that the material has enough strength and hardness that meet the requirements on strength and hardness of an insulation component.

According to the invention , the said step of "injecting into the mold a reaction material to form a seamless stiff polymer material layer surrounding the inner insulation foam layer by reaction injection-molding" specifically is a step of injecting the reaction material into the mold through a inlet of the mold until the reaction material fills up the mold and then reaction curing the reaction material by maintaining the temperature. This molding process for the seamless stiff polymer material layer is simple and easy to operate.

According to the invention, in order to obtain suitable reaction rate when the reaction material is reaction cured, and to obtain a seamless stiff polymer material layer having good uniformity and high strength, the reaction curing is carried out at a temperature maintained in an range of 45 °C ∼ 80 °C, for about 1 to 10 minutes.

According to the invention, in order to obtain a seamless stiff polymer material layer having good uniformity and high strength, the mold is provided with a heating device and before the step of injecting the reaction material into the mold, the mold is pre-heated to 45°C - 80°C.

Optionally, in order to facilitate the demolding of the seamless stiff polymer material layer 1, the process of the invention further comprises a step of coating the mold with a release agent before the step of fixing the inner insulation foam layer into a mold. The releasing agent may be silicone oil, perfluoroalkyl compounds, perfluoroalkyl acrylate, a fluorine resin coating film, etc, preferably silicone oil.

According to the invention, to obtain a suitable outlet rate during injection, the viscosity of the reaction material is 100 - 1000mpa.s.

Optionally, in order to obtain a seamless stiff polymer material layer having smooth surface, the said mold is provided with a lock and in the step of "injecting the reaction material into the mold through a inlet of the mold until the reaction material fills up the mold and then reaction curing the reaction material by maintaining the temperature", the reaction material for forming the seamless stiff polymer material layer is injected into the mold through a inlet of the mold until the reaction material fills up the mold, then the mold is locked and the reaction material is reaction cured by maintaining the temperature.

Optionally, before the step of "fixing the inner insulation foam layer into a mold", the process of the invention further comprises step of forming the inner insulation foam layer by injection-foaming to obtain the inner insulation foam layer.

Optionally, in order to obtain the inner insulation foam layer with good uniformity and good insulation properties, during the step of forming the inner insulation foam layer by injection-foaming, the injection pressure is 10 - 20Mpa, the mold temperature is 35 - 60°C, and the curing time is 3 - 10min.

According to the invention , in order to provide the insulating component with suitable hardness, corrosion resistance, light weight and better insulation effect, the said step of "injecting into the mold a reaction material to form a seamless stiff polymer material layer surrounding the inner insulation foam layer by reaction injection-molding" specifically is a step of injecting PU reaction material into the mold, forming a seamless stiff PU surrounding the inner insulation foam layer by reaction injection-molding.

The said PU reaction material refers to the reaction material required to make the seamless stiff PU layer.

Optionally, in order to obtain a better insulation effect, the inner insulation foam layer is an inner insulation PU foam

According to the invention, in order to render the insulation component with sufficient hardness and insulation effect, the seamless stiff PU layer has density or hardness that is greater than the density or hardness of the inner insulation PU foam layer respectively.

Optionally, the PU reaction material comprises aromatic isocyanate, polyol, catalyst and chain extender, or the temperature of the reaction material injected into the mold is 45°C - 80°C, in order that the reaction material has suitable injection viscosity to give a relatively suitable injection rate. The components and ratio of the components in said PU reaction material can be those commonly used in PU plastics production. The said polyol can be a polyester polyol or polyether polyol. The said catalyst can be diethyl toluene diamine, dimethylthio toluene diamine, etc. The said chain extender may be an amine chain extender or an alcohol chain extender, such as diethanolamine, triethanolamine and the like. The said PU-synthesizing material can also include plasticizers, flame retardants, etc. Preferably the said isocyanate is aromatic isocyanates, because the aromatic isocyanates is relatively cheap, which can reduce the production cost of the insulation component.

Optionally, in order to produce the seamless stiff polymer material layer with suitable hardness and light weight, the said polyol is a polyester polyol or polyether polyol.

Optionally, in order to produce the seamless stiff polymer material layer with suitable hardness and light weight, the thickness of the seamless stiff polymer material layer is of 1.5 mm ∼ 2.5mm.

Optionally, the seamless stiff polymer material layer comprises at least a part of stiff material that is above food safety grade, such that the part which will contact food is safe and hygienic.

Optionally, the seamless stiff polymer material layer comprises a shell and a liner being fitted together, with the liner being a stiff material that is above food safety grade. As during the application, the liner may be in contact with food, the use of stiff material layer above food safety grade for the liner has an additional advantage of food safety and hygiene.

Optionally, according to the invention, the insulation component is a door of a cold storage device, a cabinet or a shelving board. The cold storage device can be refrigerator, freezer or ice bar, etc. When the insulation component is used as a door of a cold storage device, a cabinet or a shelving board, the thermal insulation is good, the hardness is suitable and the weight is light.

Preferably, according to the invention, the seamless stiff polymer material layer of the invention has hardness of 75D or more to meet the requirement on the hardness of the insulation component.

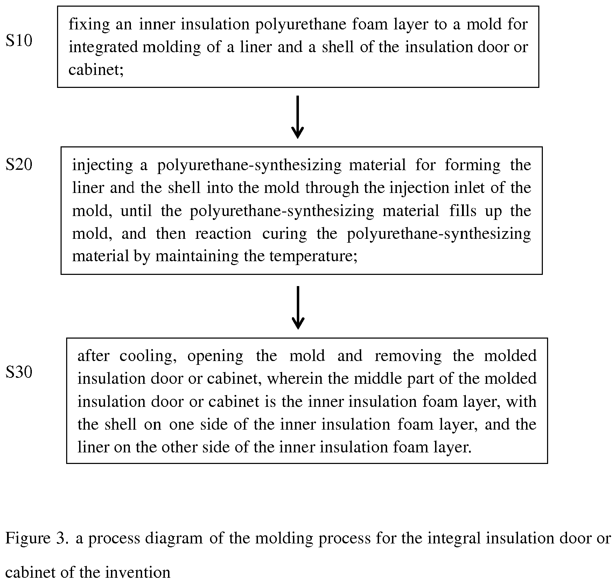

In still another embodiment of the invention, referring to figure 3, the present invention relates to a molding process for an insulation door or cabinet, comprising the following steps:
S10: fixing an inner insulation polyurethane foam layer to a mold for integrated molding of a liner and a shell of the insulation door or cabinet;
S20: injecting a polyurethane-synthesizing material for forming the liner and the shell into the mold through the injection inlet of the mold, until the polyurethane-synthesizing material fills up the mold, and then reaction curing the polyurethane-synthesizing material by maintaining the temperature;
S30. after cooling, opening the mold and removing the molded insulation door or cabinet, wherein the middle part of the molded insulation door or cabinet is the inner insulation foam layer, with the shell on one side of the inner insulation foam layer, and the liner on the other side of the inner insulation foam layer.

Optionally, the cooling time is preferably 2 to 5minutes. According to the invention, in order to obtain an insulation door or cabinet with better mechanical properties, the reaction curing is carried out at a temperature maintained in a range of from 45°C ∼ 80°C, for 1 to 10 minutes.

According to the invention, the mold used in the process of the invention is a mold provided with a heating device. Before the step of injecting the polyurethane-synthesizing material for forming the liner and the shell, the mold is preheated to 45°C ∼ 80°C.

Optionally, the said polyurethane-synthesizing material comprises isocyanate, polyol, catalyst and chain extender, and the temperature of the injected polyurethane-synthesizing material is in a range from 45°C ∼ 80°C. The components and ratio of the components in the polyurethane-synthesizing material can be those commonly used in polyurethane plastics production, as long as except for the molded inner insulation layer, the hardness of the door or cabinet is 75D or more. The said polyol can be a polyether polyol or a polyester polyol, the said catalyst can be diethyl toluene diamine, dimethylthio toluene diamine, etc. The said chain extender can be an amine chain extender or an alcohol chain extenders, such as diethanolamine, triethanolamine and the like; the said polyurethane-synthesizing material can also include plasticizers, flame retardants and the like. The said isocyanate is preferably aromatic isocyanate because aromatic isocyanate is cheaper and can reduce the production cost of molded insulation door or cabinet.

During the process, pigment can also be added to the polyurethane-synthesizing material in order to obtain insulation door or cabinet with different color.

Optionally, in order to facilitate the demolding of the molded insulation door or cabinet, the process of the invention further comprises a step of coating the mold with a release agent before the step of "fixing the inner insulation polyurethane foam layer to a mold for integrated molding of a liner and a shell of the insulation door or cabinet". The releasing agent may be silicone oil, perfluoroalkyl compounds, perfluoroalkyl acrylate, a fluorine resin, etc, preferably silicone oil.

According to the invention, in order that the polyurethane-synthesizing material will flow out the injecting device and into the mold more easily, the viscosity of the said polyurethane-synthesizing material is in the range of 100 ∼ 1000mpa.s.

Optionally, the said mold is provided with a lock. In the step of "injecting a polyurethane-synthesizing material for forming the liner and the shell into the mold through the injection inlet of the mold, until the polyurethane-synthesizing material fills up the mold, and then reaction curing the polyurethane-synthesizing material by maintaining the temperature", the polyurethane-synthesizing material for forming the shell and the liner is injected into the mold through a inlet of the mold until the polyurethane-synthesizing material fills up the mold, then the mold is locked and the polyurethane-synthesizing material is reaction cured by maintaining the temperature.

Optionally, before the step of "fixing the inner insulation polyurethane foam layer to a mold for integrated molding of a liner and a shell of the insulation door or cabinet", the process of the invention further comprises a step of forming the inner insulation polyurethane foam layer by injection-foaming molding.

Optionally, in the step of forming the inner insulation polyurethane foam layer by injection-foaming molding, the mold temperature is 35°C ∼ 60°C, the injection pressure is of 10 ∼ 20 Mpa, curing time is 3 to 10 minutes. The shape of the injection molded inner layer can be the same as that of the inner layer of refrigerator in the prior art.

The raw materials of the said injection-foaming molded inner insulation polyurethane foam layer can be the same as the injection molded inner insulation polyurethane foam layer in the art. This will not be described further here.

In an embodiment of the invention, the present invention provides an insulation door or cabinet, made from the molding process of the invention.

The insulation door or cabinet of the invention can be simply produced, has light weight, is easy to be recovered, has better insulation effect, has an integral structure without any seam, and has an elegant appearance.

The said insulation door or cabinet of the invention can be the insulation door or cabinet of refrigerating device such as refrigerator, freezer, etc.

In another embodiment of the invention, the present invention provides a refrigerating device, equipped with the insulation door or cabinet of the invention. The said refrigerating device can be refrigerator, freezer, etc. The refrigerating device of this invention has light weight and excellent insulation effect.

### ADVANTAGES OF THE INVENTION

The present invention has following advantages:
1. In the present invention, when the reaction material is injected into the mold, the pressure inside the mold is ambient pressure, preferably it is normal pressure. The process of the invention does not comprise the step of vacuum-forming in the art. Compared with the process for producing insulation part in the prior art, the integrated molding process for the insulation component of the invention is more simple, reduces the production cost and improves the productivity;
2. The insulation component made by the process of this invention is light, easy to transport. A refrigerating device with this insulation component, such as the refrigerator, is also light, and easy to transport;
3. It will be easy to recover the insulation component made by the process of this invention, because the shell, the liner and the inner layer may be of the same material, thus can be recovered together without separation. Therefore, it is convenient for recovering;
4. Because the polyurethane has poor heat conductivity, with the insulation door or cabinet made by the process of this invention, the flow rate of a cold air from inside the refrigerating device to outside the device through the device door and lateral part of the door or cabinet will be reduced, and the insulation effect will be better.
5. The insulation component, such as insulation door or cabinet of the invention, has an integral structure without any seam, and has an elegant appearance.

The insulation door or cabinet of the invention can be easily produced, has light weight, is convenient to recover, has better insulation effect, has an integral structure without any seam, and has an elegant appearance.

The mold of the liner and the shell of the integratedly molded insulation door or cabinet of the invention is a mold that can give the molded shape of the liner and the shell of an insulation door or cabinet. The shape of the mold can be designed according to the shape of the liner and the shell of an insulation door or cabinet by people skilled in the art. This will not be described in detailed here.

### EXAMPLES

The present invention will be further illustrated hereinafter with the reference of the specific examples which are exemplary and explanatory only and are not restrictive.

### Example 1

An insulation door or cabinet of is produced in example 1 by a process comprising the following steps:
S401: providing a mold for integrated molding of a liner and a shell of the insulation door or cabinet;
S402: coating the mold with a release agent, wherein the release agent is silicone oil;
S403: fixing an inner insulation polyurethane foam layer to the mold;
S404: injecting a polyurethane-synthesizing material for forming the liner and the shell into the mold through the injection inlet of the mold, until the polyurethane-synthesizing material fills up the mold, wherein the temperature of the polyurethane-synthesizing material is 45°C, and then reaction curing the polyurethane-synthesizing material by maintaining the temperature at 45°C for 10 minutes;
S405: after cooling for 2 minutes, opening the mold and removing the molded insulation door or cabinet, wherein the middle part of the molded insulation door or cabinet is the inner insulation polyurethane foam layer, with the shell on one side of the inner insulation polyurethane foam layer, and the liner on the other side of the inner insulation polyurethane foam layer.

### Example 2

An insulation door or cabinet is produced in example 2 by a process comprising the following steps:
S501: providing a mold for integrated molding of a liner and a shell of the insulation door or cabinet;
S502: coating the mold with a release agent, wherein the release agent is fluorine resin;
S503: fixing an inner insulation polyurethane foam layer to the mold;
S504: preheating the mold to a temperature of 80°C;
S505: injecting a polyurethane-synthesizing material for forming the liner and the shell into the mold through the injection inlet of the mold, until the polyurethane-synthesizing material fills up the mold, wherein the temperature of the injected polyurethane-synthesizing material is 80°C, and then reaction curing the polyurethane-synthesizing material by maintaining the temperature at 80°C for 5 minutes;
S506: after cooling for 3 minutes, opening the mold and removing the molded insulation door or cabinet, wherein the middle part of the molded insulation door or cabinet is the inner insulation polyurethane foam layer, with the shell on one side of the inner insulation polyurethane foam layer, and the liner on the other side of the inner insulation polyurethane foam layer.

### Example 3

An insulation door or cabinet is produced in example 3 by a process comprising the following steps:
S601: providing a mold for integrated molding of a liner and a shell of the insulation door or cabinet, wherein the mold is provided with a heating device;
S602: fixing an inner insulation polyurethane foam layer to the mold;
S603: preheating the mold to a temperature of 60°C;
S604: injecting a polyurethane-synthesizing material for forming the liner and the shell into the mold through the injection inlet of the mold, until the polyurethane-synthesizing material fills up the mold, wherein the temperature of the injected polyurethane-synthesizing material is 60°C, and then reaction curing the polyurethane-synthesizing material by maintaining the temperature at 60°C for 10 minutes;
S605: after cooling for 5 minutes, opening the mold and removing the molded insulation door or cabinet, wherein the middle part of the molded insulation door or cabinet is the inner insulation polyurethane foam layer, with the shell on one side of the inner insulation polyurethane foam layer, and the liner on the other side of the inner insulation polyurethane foam layer.

### Example 4

An insulation door or cabinet 4 is produced in example by a process comprising the following steps:
S701: injecting a foaming material for a molded inner insulation layer into a mold for foam-molding an inner layer, and foam-molding the foaming material to form an inner insulation polyurethane foam layer, wherein the injection pressure is 10Mpa, the temperature of the mold during foam-molding is 35°C, the curing time is 3 minutes, foaming material uses existing formulation, e.g. polyether polyol, diphenylmethanediisocyanate (MDI), and blowing agent;
S702: providing a mold for integrated molding of a liner and a shell of the insulation door or cabinet, wherein the mold is provided with a heating device;
S703: fixing the inner insulation polyurethane foam layer to the mold for integrated molding of the liner and the shell of the insulation door or cabinet;
S704: preheating the mold to a temperature of 60°C;
S705: injecting a polyurethane-synthesizing material for forming the liner and the shell into the mold through the injection inlet of the mold, until the polyurethane-synthesizing material fills up the mold, wherein the temperature of the injected polyurethane-synthesizing material is 60°C, and then reaction curing the polyurethane-synthesizing material by maintaining the temperature at 60°C for 10 minutes;
S706: after cooling for 5 minutes, opening the mold and removing the molded insulation door or cabinet, wherein the middle part of the molded insulation door or cabinet is the inner insulation polyurethane foam layer, with the shell on one side of the inner insulation polyurethane foam layer, and the liner on the other side of the inner insulation polyurethane foam layer.

### Example 5

An insulation door or cabinet is produced in example 5 by a process comprising the following steps:
S801: injecting a foaming material for a molded inner insulation layer into a mold for foam-molding an inner layer, and foam-molding the foaming material to form an inner insulation polyurethane foam layer, wherein the injection pressure is 20Mpa, the temperature of the mold during foam-molding is 40°C, the curing time is 10 minutes, foaming material uses existing formulation, e.g. polyether polyol, diphenylmethanediisocyanate (MDI), and blowing agent;
S802: providing a mold for integrated molding of a liner and a shell of the insulation door or cabinet, wherein the mold is provided with a heating device;
S803: fixing the inner insulation polyurethane foam layer to the mold for molding of the liner and the shell of the insulation door or cabinet;
S804: preheating the mold to a temperature of 55°C;
S805: injecting a polyurethane-synthesizing material for forming the liner and the shell into the mold through the injection inlet of the mold, until the polyurethane-synthesizing material fills up the mold, wherein the temperature of the polyurethane-synthesizing material is 55°C, and then reaction curing the polyurethane-synthesizing material by maintaining the temperature at 55°C for 5 minutes;
S806: after cooling for 5 minutes, opening the mold and removing the molded insulation door or cabinet, wherein the middle part of the molded insulation door or cabinet is the inner insulation polyurethane foam layer, with the shell on one side of the inner insulation polyurethane foam layer, and the liner on the other side of the inner insulation polyurethane foam layer.

### Example 6

An insulation door or cabinet is produced in example 6 by a process comprising the following steps:
S901: injecting a foaming material for a molded inner insulation layer into a mold for foam-molding an inner layer, and foam-molding the foaming material to form an inner insulation polyurethane foam layer, wherein the injection pressure is 20Mpa, the temperature of the mold during foam-molding is 35°C, the curing time is 10 minutes, foaming material uses existing formulation, e.g. polyether polyol, diphenylmethanediisocyanate (MDI), and blowing agent;
S902: providing a mold for integrated molding of a liner and a shell of the insulation door or cabinet, wherein the mold is provided with a heating device;
S903: fixing the inner insulation polyurethane foam layer to the mold for integrated molding of the liner and the shell of the insulation door or cabinet;
S904: preheating the mold to a temperature of 50°C;
S905: injecting a polyurethane-synthesizing material for forming the liner and the shell into the mold through the injection inlet of the mold, until the polyurethane-synthesizing material fills up the mold, wherein the temperature of the polyurethane-synthesizing material is 55°C, and then reaction curing the polyurethane-synthesizing material by maintaining the temperature at 55°C for 5 minutes, then locking the mold;
S906: after cooling for 5 minutes, opening the mold and removing the molded insulation door or cabinet, wherein the middle part of the molded insulation door or cabinet is the inner insulation polyurethane foam layer, with the shell on one side of the inner insulation polyurethane foam layer, and the liner on the other side of the inner insulation polyurethane foam layer.

The sequence of the specific examples shown above is for easy presentation only, and does not indicate their merits.

Each of the documents referred to above is incorporated herein by reference.

Except in the Examples, or where otherwise explicitly indicated, all numerical quantities in this description specifying amounts of materials, reaction conditions, and the like, are to be understood as modified by the word "about".

It is to be understood that the upper and lower amount, range, and ratio limits set forth herein may be independently combined. Similarly, the ranges and amounts for each element of the invention can be used together with ranges or amounts for any of the other elements.

## Claims

1. A molding process for a thermal insulation component of a refrigerating device provided with a thermal insulation component which comprises an inner insulation foam layer and a seamless stiff polymer material layer formed by reaction injection molding and surrounding the inner insulation foam layer, wherein
• the insulation component is a door of a cold storage device or a cabinet,
• the seamless stiff polymer material layer is a seamless stiff PU layer,
• the seamless stiff polymer material layer has hardness of 75D or more to meet the requirement on the hardness of the insulation component,
• the seamless stiff polymer material layer has density and hardness that is greater than the density and hardness of the inner insulation foam layer respectively; and
• the inner insulation foam layer is an inner insulation PU foam 1 layer, comprising the following process steps:
A. fixing an inner insulation foam layer into a mold;
B. injecting into the mold a reaction material to form a seamless stiff polymer material layer surrounding the inner insulation foam layer by reaction injection-molding,
wherein step B is a step of injecting PU reaction material into the mold, forming a seamless stiff PU layer surrounding the inner insulation foam layer by reaction injection-molding, wherein
• the reaction material is injected through a inlet of the mold until the reaction material fills up the mold, and then reaction curing the reaction material by maintaining the temperature to form a seamless stiff polymer material layer surrounding the inner insulation foam layer, and the temperature maintained for the reaction curing is 45°C to 80°C, and the time for the reaction curing is 1 to 10 minutes, wherein the mold is provided with a heating device and before step B, the mold is pre-heated to 45°C - 80°C;
• the viscosity of the reaction material is 100 - 1000 mpa.s,,
• the inner insulation foam layer is an inner insulation polyurethane foam layer; the mold is a mold for integrated molding of the seamless stiff polymer material layer; and the reaction material is a polyurethane-synthesizing material for forming the seamless stiff polymer material layer, and
• the thermal insulation component is an insulation door or cabinet having a shell and a liner, and the shell and the liner are integratedly formed by the seamless stiff polymer material layer.

2. The molding process of Claim 1, **characterized in that** the thickness of the seamless stiff polymer material layer is 1 mm - 3 mm.

3. The molding process of Claim 1 or 2, **characterized in that** before step A, the molding process further comprises a step of
C. coating the mold with a release agent.

4. The molding process of any one of Claims 1 to 3, **characterized in that** the mold is provided with a lock.

5. The molding process of Claim 4, **characterized in that** in step B, the reaction material is injected into the mold through a inlet of the mold until the reaction material fills up the mold, then the mold is locked and the reaction material is reaction cured by maintaining the temperature.

6. The molding process of any one of Claims 1 to 5, **characterized in that** before step A, the molding process further comprises step of forming the inner insulation foam layer by an inj ection-foaming.

7. The molding process of Claim 6, **characterized in that** during the step of forming the inner insulation foam layer by an injection-foaming, the injection pressure is 10 - 20Mpa, the mold temperature is 35 - 60°C, and the curing time is 3 - 10min.

8. The molding process of Claim1, **characterized in that** the PU reaction material comprises aromatic isocyanate, polyol, catalyst and chain extender, or the temperature of the reaction material injected into the mold is 45°C - 80°C.

9. The molding process of Claim 1, **characterized in that** the polyol is a polyester polyol or polyether polyol.

10. The molding process of Claim 1, **characterized in that** the said polyurethane-synthesizing material contains aromatic isocyanate, polyol, catalyst and chain extender, and the temperature of the injected polyurethane-synthesizing material is 45°C ∼ 80°C.

11. The molding process of claim 1, **characterized in that** the refrigerating device is a refrigerator or freezer.

## Patentansprüche

1. Formverfahren für eine Wärmeisolationskomponente einer Kühlvorrichtung, die mit einer Wärmeisolationskomponente versehen ist, die eine innere Isolationsschaumstoffschicht und eine nahtlose steife Polymermaterialschicht, die durch Reaktionsspritzguss gebildet ist und die innere Isolationsschaumstoffschicht umgibt, umfasst, wobei
• die Isolationskomponente eine Tür einer Kältespeichervorrichtung oder ein Schrank ist,
• die nahtlose steife Polymermaterialschicht eine nahtlose steife PU-Schicht ist,
• die nahtlose steife Polymermaterialschicht eine Härte von 75D oder mehr aufweist, um den Anforderungen an die Härte der Isolationskomponente zu entsprechen,
• die nahtlose steife Polymermaterialschicht eine Dichte und Härte aufweist, die größer als die Dichte bzw. Härte der inneren Isolationsschaumstoffschicht sind; und
• die innere Isolationsschaumstoffschicht eine innere Isolations-PU-Schaumstoffschicht ist, umfassend die folgenden Verfahrensschritte:
A. Befestigen einer inneren Isolationsschaumstoffschicht in einem Formwerkzeug;
B. Einspritzen eines Reaktionsmaterials in das Formwerkzeug, um durch Reaktionsspritzguss eine nahtlose steife Polymermaterialschicht zu bilden, die die innere Isolationsschaumstoffschicht umgibt, wobei Schritt B ein Schritt des Einspritzens von PU-Reaktionsmaterial in das Formwerkzeug ist, um durch Reaktionsspritzguss eine nahtlose steife PU-Schicht zu bilden, die die innere Isolationsschaumstoffschicht umgibt, wobei
• das Reaktionsmaterial durch einen Einlass des Formwerkzeugs eingespritzt wird, bis das Reaktionsmaterial das Formwerkzeug ausfüllt, und anschließend das Reaktionsmaterial reaktionsgehärtet wird, indem die Temperatur gehalten wird, um eine nahtlose steife Polymermaterialschicht zu bilden, die die innere Isolationsschaumstoffschicht umgibt, und die Temperatur, die für das Reaktionshärten gehalten wird, von 45 °C bis 80 °C beträgt, und die Zeit für das Reaktionshärten von 1 bis 10 Minuten beträgt, wobei das Formwerkzeug mit einer Heizvorrichtung versehen ist und das Formwerkzeug vor Schritt B auf 45 °C bis 80 °C vorgeheizt wird,
• die Viskosität des Reaktionsmaterials 100-1000 mPa.s beträgt,
• die innere Isolationsschaumstoffschicht eine innere Isolations-Polyurethanschaumstoffschicht ist; das Formwerkzeug ein Formwerkzeug zum integrierten Formen der nahtlosen steifen Polymermaterialschicht ist; und das Reaktionsmaterial ein polyurethansynthetisierendes Material zum Bilden der nahtlosen steifen Polymermaterialschicht ist, und
• die Wärmeisolationskomponente eine/ein Isoliertür oder -schrank mit einer Schale und einer Auskleidung ist und die Schale und die Auskleidung integriert von der nahtlosen steifen Polymermaterialschicht gebildet werden.

2. Formverfahren gemäß Anspruch 1, **dadurch gekennzeichnet, dass** die Dicke der nahtlosen steifen Polymermaterialschicht 1 mm bis 3 mm beträgt.

3. Formverfahren gemäß Anspruch 1 oder 2, **dadurch gekennzeichnet, dass** das Formverfahren vor Schritt A ferner einen Schritt des
C. Beschichtens des Formwerkzeugs mit einem Trennmittel umfasst.

4. Formverfahren gemäß einem der Ansprüche 1 bis 3, **dadurch gekennzeichnet, dass** das Formwerkzeug mit einer Verriegelung versehen ist.

5. Formverfahren gemäß Anspruch 4, **dadurch gekennzeichnet, dass** bei Schritt B das Reaktionsmaterial durch einen Einlass des Formwerkzeugs eingespritzt wird, bis das Reaktionsmaterial das Formwerkzeug ausfüllt, anschließend das Formwerkzeug verriegelt wird und das Reaktionsmaterial durch Halten der Temperatur reaktionsgehärtet wird.

6. Formverfahren gemäß einem der Ansprüche 1 bis 5, **dadurch gekennzeichnet, dass** das Formverfahren vor Schritt A ferner einen Schritt des Bildens der inneren Isolationsschaumstoffschicht durch Spritzschäumen umfasst.

7. Formverfahren gemäß Anspruch 6, **dadurch gekennzeichnet, dass** bei dem Schritt des Bildens der inneren Isolationsschaumstoffschicht durch Spritzschäumen der Einspritzdruck 10-20 MPa beträgt, die Temperatur des Formwerkzeugs 35-60 °C beträgt und die Härtungszeit 3-10 min beträgt.

8. Formverfahren gemäß Anspruch 1, **dadurch gekennzeichnet, dass** das PU-Reaktionsmaterial aromatisches Isocyanat, Polyol, Katalysator und Kettenverlängerungsmittel umfasst oder die Temperatur des in das Formwerkzeug eingespritzten Reaktionsmaterials 45 °C bis 80 °C beträgt.

9. Formverfahren gemäß Anspruch 1, **dadurch gekennzeichnet, dass** das Polyol ein Polyesterpolyol oder Polyetherpolyol ist.

10. Formverfahren gemäß Anspruch 1, **dadurch gekennzeichnet, dass** das polyurethansynthetisierende Material aromatisches Isocyanat, Polyol, Katalysator und Kettenverlängerungsmittel enthält und die Temperatur des eingespritzten polyurethansynthetisierenden Materials 45 °C∼80 °C beträgt.

11. Formverfahren gemäß Anspruch 1, **dadurch gekennzeichnet, dass** die Kühlvorrichtung ein Kühlschrank oder Gefrierschrank ist.

## Revendications

1. Procédé de moulage pour un élément d'isolation thermique d'un appareil de réfrigération pourvu d'un élément d'isolation thermique qui comprend une couche de mousse isolante interne et une couche de matériau polymère rigide sans joint formée par moulage par injection et réaction et entourant la couche de mousse isolante interne, dans lequel
• l'élément d'isolation est une porte d'un appareil d'entreposage frigorifique ou un caisson,
• la couche de matériau polymère rigide sans joint est une couche de PU rigide sans joint,
• la couche de matériau polymère rigide sans joint a une dureté supérieure ou égale à 75D pour satisfaire à l'exigence concernant la dureté de l'élément d'isolation,
• la couche de matériau polymère rigide sans joint a une densité et une dureté qui sont supérieures à la densité et la dureté de la couche de mousse isolante interne respectivement ; et
• la couche de mousse isolante interne est une couche de mousse de PU isolante interne, comprenant les étapes de procédé suivantes :
A. la fixation d'une couche de mousse isolante interne dans un moule ;
B. l'injection dans le moule d'une matière de réaction pour former une couche de matériau polymère rigide sans joint entourant la couche de mousse isolante interne par moulage par injection et réaction,
dans lequel l'étape B est une étape d'injection de matière de réaction de PU dans le moule, formant une couche de PU rigide sans joint entourant la couche de mousse isolante interne par moulage par injection et réaction, dans lequel
• la matière de réaction est injectée par une entrée du moule jusqu'à ce que la matière de réaction remplisse le moule, puis la matière de réaction est durcie par réaction par maintien de la température pour former une couche de matériau polymère rigide sans joint entourant la couche de mousse isolante interne, et la température maintenue pour le durcissement par réaction est de 45 °C à 80 °C et la durée pour le durcissement par réaction est de 1 à 10 minutes, le moule étant pourvu d'un dispositif de chauffage et avant l'étape B, le moule étant préchauffé à 45 °C-80 °C ;
• la viscosité de la matière de réaction est de 100-1000 mPa.s,
• la couche de mousse isolante interne est une couche de mousse de polyuréthane isolante interne ; le moule est un moule pour le moulage intégré de la couche de matériau polymère rigide sans joint ; et la matière de réaction est une matière de synthèse de polyuréthane pour la formation de la couche de matériau polymère rigide sans joint, et
• l'élément d'isolation thermique est une porte ou un caisson isolants ayant une coque et une cuve interne et la coque et la cuve interne sont formées d'un seul tenant par la couche de matériau polymère rigide sans joint.

2. Procédé de moulage selon la revendication 1, **caractérisé en ce que** l'épaisseur de la couche de matériau polymère rigide sans joint est de 1 mm-3 mm.

3. Procédé de moulage selon la revendication 1 ou 2, **caractérisé en ce qu'**avant l'étape A, le procédé de moulage comprend en outre une étape de
C. enduction du moule avec un agent de démoulage.

4. Procédé de moulage selon l'une quelconque des revendications 1 à 3, **caractérisé en ce que** le moule est pourvu d'un dispositif de verrouillage.

5. Procédé de moulage selon la revendication 4, **caractérisé en ce que** dans l'étape B, la matière de réaction est injectée dans le moule par une entrée du moule jusqu'à ce que la matière de réaction remplisse le moule, puis le moule est verrouillé et la matière de réaction est durcie par réaction par maintien de la température.

6. Procédé de moulage selon l'une quelconque des revendications 1 à 5, **caractérisé en ce qu'**avant l'étape A, le procédé de moulage comprend en outre l'étape de formation de la couche de mousse isolante interne par un moussage par injection.

7. Procédé de moulage selon la revendication 6, **caractérisé en ce que** pendant l'étape de formation de la couche de mousse isolante interne par un moussage par injection, la pression d'injection est de 10-20 MPa, la température de moule est de 35-60 °C et la durée de durcissement est de 3-10 min.

8. Procédé de moulage selon la revendication 1, **caractérisé en ce que** la matière de réaction de PU comprend un isocyanate aromatique, un polyol, un catalyseur et un allongeur de chaîne ou la température de la matière de réaction injectée dans le moule est de 45 °C-80 °C.

9. Procédé de moulage selon la revendication 1, **caractérisé en ce que** le polyol est un polyol de polyester ou un polyol de polyéther.

10. Procédé de moulage selon la revendication 1, **caractérisé en ce que** ladite matière de synthèse de polyuréthane contient un isocyanate aromatique, un polyol, un catalyseur et un allongeur de chaîne et la température de la matière de synthèse de polyuréthane injectée est de 45 °C-80 °C.

11. Procédé de moulage selon la revendication 1, **caractérisé en ce que** l'appareil de réfrigération est un réfrigérateur ou un congélateur.
